# EUROPÄISCHE PATENTSCHRIFT

(11) **EP 1 159 868 B1**
(45) Veröffentlichungstag und Bekanntmachung des Hinweises auf die Patenterteilung: **08.12.2004**
(21) Anmeldenummer: 01111502.9
(22) Anmeldetag: 11.05.2001
(51) Int. Cl.: A01F 12/46, B65G 33/16

(54) **Mähdrescher**
Combine harvester
Moissonneuse-batteuse

(30) Priorität: 31.05.2000 DE 10027273
(43) Veröffentlichungstag der Anmeldung: 05.12.2001
(73) Patentinhaber: DEERE & COMPANY, Moline, Illinois 61265-8098 (US)
(72) Erfinder: Hirsch, Walter, 66459 Kirkel/Limbach (DE); Schläfer, Steffen, 67105 Schifferstadt (DE)
(74) Vertreter: Holst, Sönke, Dr.

(56) Entgegenhaltungen:
- EP-A- 0 051 550
- EP-A- 0 503 739
- FR-A- 2 043 688
- FR-A- 2 085 159
- FR-A- 2 663 618
- GB-A- 1 580 420
- US-A- 5 380 247
- PATENT ABSTRACTS OF JAPAN vol. 1997, no. 09, 30. September 1997 (1997-09-30) & JP 09 117219 A (KUBOTA CORP), 6. Mai 1997 (1997-05-06)
- PATENT ABSTRACTS OF JAPAN vol. 1998, no. 03, 27. Februar 1998 (1998-02-27) & JP 09 301516 A (SAITO SHIGENORI), 25. November 1997 (1997-11-25)

## Beschreibung

Die Erfindung betrifft einen Mähdrescher mit einer Sammeleinrichtung für Erntegut und einem am Boden der Sammeleinrichtung angeordneten ersten Schneckenförderer, der eingerichtet ist, Erntegut einem zweiten Schneckenförderer zuzuführen, der zumindest über einen Teilbereich seiner Länge im Winkel zur Längsrichtung des ersten Schneckenförderers verläuft.

Bekannte selbstfahrende Mähdrescher (DE 196 06 730 A) sind mit Entleervorrichtungen zum Entladen des Korntanks versehen, die mehrere Schneckenförderer aufweisen. Ein erster Schneckenförderer erstreckt sich über die Breite des Bodens des Korntanks und führt das Korn einem zweiten Schneckenförderer zu, der in einem ersten, vertikal verlaufenden Abschnitt eines in sich starren Entleerrohrs angeordnet ist. Der erste Abschnitt des Entleerrohrs ist zweigeteilt, so dass sein oberer Teil gemeinsam mit dem etwa horizontal verlaufenden zweiten Abschnitt des Entleerrohrs um eine vertikal verlaufende Achse schwenkbar ist. Im zweiten Abschnitt des Entleerrohrs befindet sich ein dritter Schneckenförderer. Als nachteilig ist dabei anzusehen, dass die Antriebe der drei Schneckenförderer mechanisch aufwändig sind, und dass der Antrieb und die Lagerungen insbesondere des dritten Schneckenförderers den Querschnitt des Entleerrohrs einengen.

Auch die FR 2 043 688 zeigt einen derartigen Mähdrescher, bei dem die drei in sich starren Schneckenförderer jeweils durch Winkeltriebe untereinander antriebsmäßig verbunden sind. Ihr Antrieb erfolgt an einer Seitenwand des Korntanks an der Verbindungsstelle zwischen dem Schneckenförderer am Boden des Korntanks und dem nach oben folgenden Schneckenförderer.

In der JP 09 117 219 A ist ein Mähdrescher mit einer Entleervorrichtung des Korntanks beschrieben, bei dem ein erster horizontaler Schneckenförderer am Boden des Korntanks angebracht ist, und das Korn einem zweiten Schneckenförderer zuführt, der in einem flexiblen Entleerrohr angeordnet ist. Auch hier sind zwei separate Schneckenförderer vorgesehen, so dass separate Antriebe erforderlich sind.

In der GB 1 580 420 A ist ein flexibler Schneckenförderer beschrieben, der sich aus einem Rohr und einer darin angeordneten Förderschnecke aufbaut, die um einen flexiblen Kern gewickelt ist. In der beschriebenen Ausführungsform fördert der Schneckenförderer Material aus einem Trog nach oben zu einer Abgabestelle. Der untere Abschnitt des Schneckenförderers erstreckt sich horizontal am Boden des Trogs, während sich seine oberen Teile schräg nach oben zur Abgabestelle erstrecken. Dort befindet sich auch der Antrieb. Es wird keine Anregung gegeben, diesen Schneckenförderer an mobilen Maschinen zu verwenden.

Die der Erfindung zugrunde liegende Aufgabe wird darin gesehen, eine zuverlässige, preiswürdige und mechanisch einfache Fördereinrichtung für Erntegut zu schaffen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, beide Schneckenförderer mit einer durchgehenden Förderwendel auszustatten. Die durchgehende Förderwendel erstreckt sich sowohl über die Länge des ersten Schneckenförderers auf dem Boden der Sammeleinrichtung als auch über die Länge des zweiten Schneckenförderers, der zumindest zu Teilen im Winkel zum ersten Schneckenförderer angeordnet ist. Um den Winkel zwischen erstem und zweitem Schneckenförderer realisieren zu können, ist die Förderwendel flexibel. Der Antrieb der Förderwendel erfolgt von einer Seitenwand der Sammeleinrichtung aus. Da die durchgehende Förderwendel nur an einem Ende anzutreiben ist, spart man den Antrieb für einen der Schneckenförderer ein.

Die Förderwendel ist vorzugsweise kernlos, d. h., nicht mit einer zentralen Welle versehen.

Der zweite Schneckenförderer kann auch Kurven und Biegungen aufweisen, an die sich die flexible, biegsame Förderwendel anpasst. Er kann sich insgesamt oder über einen Teilbereich - schräg oder geradlinig - nach oben oder unten erstrecken.

Es sind keine Lagerungen für die Förderwendel erforderlich, da sie sich an den Wänden eines Rohrs des Schneckenförderers, in dem sie angeordnet ist, abstützt.

Die Erfindung kann insbesondere bei einer Entleereinrichtung für einen Korntank eines Mähdreschers Verwendung finden. Der erste Schneckenförderer führt das gedroschene Korn auf dem Boden des Korntanks zusammen und der zweite Schneckenförderer entspricht dem Entleerrohr. Die gemeinsame, durchgehende Förderwendel erstreckt sich somit über den Boden und durch das Entleerrohr. Denkbar ist auch, die Sammeleinrichtung unterhalb einer Siebeinrichtung anzuordnen, und das gedroschene Korn mit dem ersten Schneckenförderer zu sammeln und mit dem zweiten Schneckenförderer, der als Elevator für sauberes Korn dient, dem Korntank zuzuführen. Außerdem kann der erste Schneckenförderer zum Zusammenführen von Überkehr dienen, während der zweite Schneckenförderer die Überkehr wieder einer Drescheinrichtung zuführt.

In den Zeichnungen ist ein nachfolgend näher beschriebenes Ausführungsbeispiel der Erfindung dargestellt. Es zeigt:
- Fig. 1: eine Seitenansicht eines Mähdreschers mit einer erfindungsgemäßen Fördereinrichtung; und
- Fig. 2: einen Querschnitt durch den Korntank und das Entleerrohr des Mähdreschers der Figur 1.

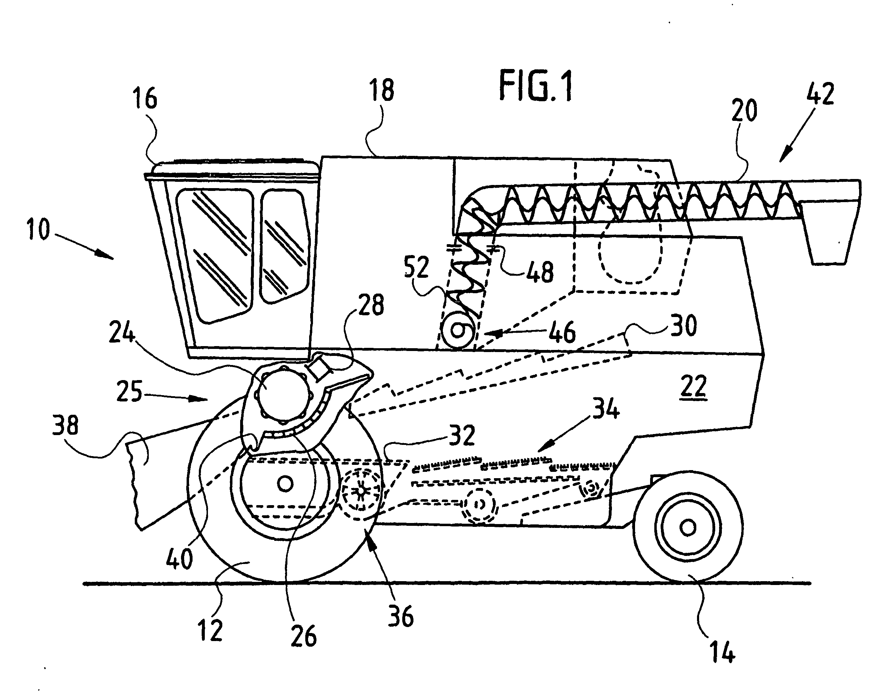

Eine in Figur 1 gezeigte Erntemaschine in der Form eines selbstfahrenden Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

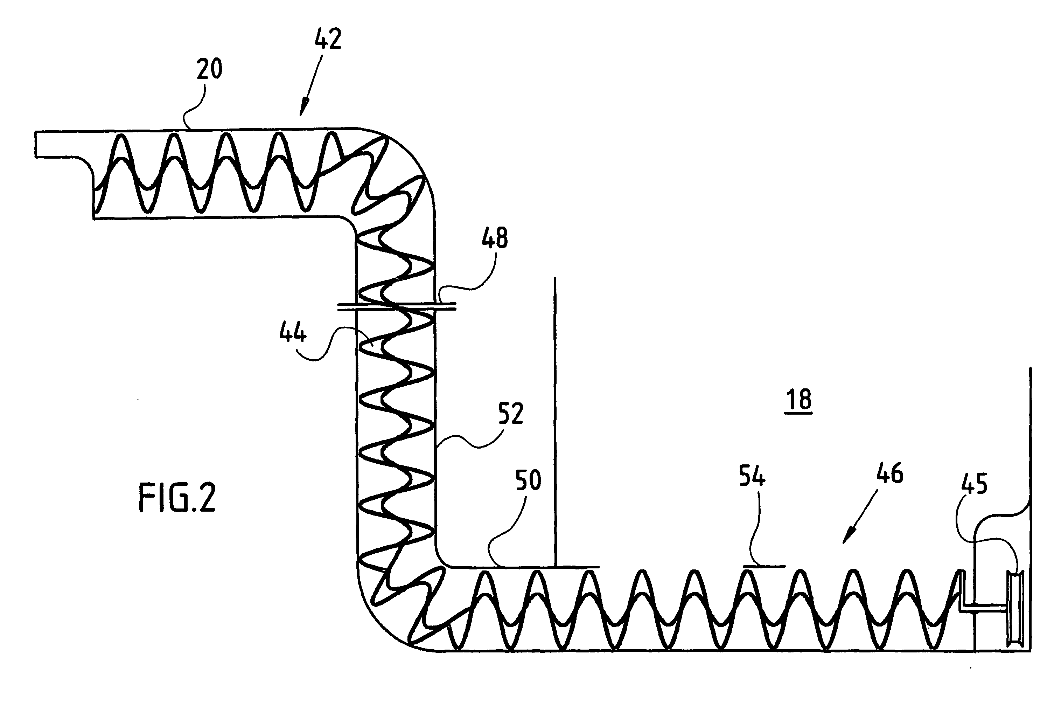

Wie insbesondere anhand der Figur 2 erkennbar ist, ist am Boden des Korntanks 18 ein erster Schneckenförderer 46 mit einer Förderwendel angeordnet, der sich über die Breite des Korntanks 18 erstreckt und das im Korntank 18 abgelegte, gedroschene Gut horizontal fördert, in Figur 2 nach links. Selbstverständlich wäre auch denkbar, dass der Schneckenförderer 46 sich in Fahrtrichtung des Mähdreschers 10 über die Länge des Korntanks erstreckt. An einer - in Figur 2 rechts eingezeichneten-Seitenwand des Korntanks 18 ist ein Antrieb 45 angeordnet, der eingerichtet ist, die Förderwendel 44 des Schneckenförderers 46 bei Bedarf in Drehung zu versetzen. Der dem Antrieb 45 gegenüberliegende Endbereich des Schneckenförderers 46 erstreckt sich in einem horizontalen Rohr 50, das eine seitliche und vertikale Führung der Förderwendel 44 bereitstellt. Mittig zwischen der Seitenwand mit dem Antrieb 45 und dem Rohr 50 ist eine kurze Führung 54 vorgesehen, die die Förderwendel 44 vertikal und horizontal umschließt und führt, und insbesondere bei größeren Belastungen verhindert, dass sich die Förderwendel 44 verformt.

Die Förderwendel 44 ist aus flexiblem und biegsamen Material hergestellt und nicht mit einem mittigen Kern versehen. Sie kann daher in Kurven verlegt werden, und das Gut um Biegungen befördern. Derartige Förderwendel ermöglichen eine materialschonende Förderung und sind beispielsweise von der Fa. Wildfellner, Österreich, erhältlich.

An das horizontale Rohr 50 schließt sich ein im wesentlichen vertikales Rohr 52 an. Die Förderwendel 44 erstreckt sich auch durch das vertikale Rohr 52 und fördert das Gut nach oben, wobei zwischen dem horizontalen Rohr 50 und dem vertikalen Rohr 52 eine rechtwinklige Biegung vorgesehen ist. Durch die erwähnte Flexibilität der Förderwendel 44 kann diese Biegung unproblematisch realisiert werden.

Am oberen Ende des vertikalen Rohrs 52 ist ein Drehkranz 48 angeordnet, der das vertikale Rohr 52 mit dem Entleerrohr 20 verbindet. Das Entleerrohr 20 ist relativ zum vertikalen Rohr 52 durch den Drehkranz 48 um eine vertikal verlaufende Achse drehbar gelagert, um das Entleerrohr 20 beim Straßentransport nach hinten und beim Entladen über einen entsprechenden Wagen oder dergleichen verschwenken zu können. Es weist einen kurzen, sich an den Drehkranz 48 anschließenden vertikal verlaufenden Abschnitt auf, der in eine Biegung übergeht, an die sich ein relativ langer, horizontaler Abschnitt anschließt. Das Entleerrohr 20 ist, wie in der Regel auch das vertikale Rohr 52 und das horizontale Rohr 50 aus Metall, kann aber auch aus Kunststoff hergestellt sein.

Die durchgehende, einteilige Förderwendel 44 erstreckt sich durch das Entleerrohr, bis zu seinem äußeren, abgabeseitigen Ende.

Im Ergebnis wird ein erster Schneckenförderer 46 durch den unteren, am Boden des Korntanks 18 verlaufenden Teil der Förderwendel 44 realisiert, während die übrigen Teile derselben Förderwendel 44 einen zweiten Schneckenförderer 42 bereitstellen, der sich zunächst nach oben, und dann wieder horizontal durch das Entleerrohr 20 erstreckt. Es ist nur ein einziger Antrieb der Entleereinrichtung des Korntanks 18 notwendig, und den Querschnitt des Entleerrohrs 20 einengende Führungen oder Lager für die Förderwendel 44 erübrigen sich. Man erhält somit eine mechanisch sehr einfache und zuverlässige Fördereinrichtung. Auch der Elevator für sauberes Korn und/oder der Überkehrelevator können mit Schneckenförderern mit durchgehenden Wendeln ausgestattet werden.

## Patentansprüche

1. Mähdrescher (10) mit einer Sammeleinrichtung für Erntegut und einem am Boden der Sammeleinrichtung angeordneten ersten Schneckenförderer (46), der eingerichtet ist, Erntegut einem zweiten Schneckenförderer (42) zuzuführen, der zumindest über einen Teilbereich seiner Länge im Winkel zur Längsrichtung des ersten Schneckenförderers (46) verläuft, **dadurch gekennzeichnet, dass** der erste Schneckenförderer (46) und der zweite Schneckenförderer (42) eine durchgehende, flexible Förderwendel (44) aufweisen, die sich sowohl über die Länge des ersten Schneckenförderers (46) auf dem Boden der Sammeleinrichtung als auch über die Länge des zweiten Schneckenförderers (42) erstreckt, und dass die Förderwendel (44) endseitig mit einem Antrieb (45) verbunden ist, der an einer Seitenwand der Sammeleinrichtung angeordnet ist.

2. Mähdrescher (10) nach Anspruch 1, **dadurch gekennzeichnet, dass** die Förderwendel (44) kernlos ist.

3. Mähdrescher (10) nach Anspruch 1 oder 2, **dadurch gekennzeichnet, dass** der zweite Schneckenförderer (42) wenigstens über einen Teilbereich seiner Länge schräg oder gerade nach oben bzw. unten verläuft.

4. Mähdrescher (10) nach einem der Ansprüche 1 bis 3, **dadurch gekennzeichnet, dass** die Sammeleinrichtung ein Korntank (18) ist, und dass der zweite Schneckenförderer (42) in einem Entleerrohr (20) des Korntanks angeordnet ist.

5. Mähdrescher (10) nach einem der Ansprüche 1 bis 3, **dadurch gekennzeichnet, dass** die Sammeleinrichtung unterhalb einer Siebeinrichtung (34) angeordnet ist und gedroschenes Erntegut sammelt, und dass der zweite Schneckenförderer (42) ein Elevator für gedroschenes Erntegut ist.

6. Mähdrescher (10) nach einem der Ansprüche 1 bis 3, **dadurch gekennzeichnet, dass** die Sammeleinrichtung Überkehr einsammelt, und dass der zweite Schneckenförderer (42) ein Elevator für Überkehr ist.

## Claims

1. A combine harvester (10) with a collecting device for harvested crop and a first auger conveyor (46) which is disposed on the bottom of the collecting device and is arranged to feed harvested crop to a second auger conveyor (42) which runs over at least part of its length at an angle to the longitudinal direction of the first auger conveyor (46), **characterized in that** the first auger conveyor (46) and the second auger conveyor (42) comprise a continuous, flexible conveyor helix (44) which extends both over the length of the first auger conveyor (46) on the bottom of the collecting device and also over the length of the second auger conveyor (42), and **in that** the conveyor helix (44) is connected at the end to drive means (45) which are disposed on a sidewall of the collecting device.

2. A combine harvester (10) according to claim 1, **characterized in that** the conveyor helix (44) has no core.

3. A combine harvester (10) according to claim 1 or 2, **characterized in that** the second auger conveyor (42) runs at an angle or directly upwards or downwards over at least part of its length.

4. A combine harvester (10) according to any of claims 1 to 3, **characterized in that** the collecting device is a grain tank (18) and **in that** the second auger conveyor (42) is arranged in a discharge pipe (20) of the grain tank.

5. A combine harvester (10) according to any of claims 1 to 3, **characterized in that** the collecting device is arranged below a sieve device (34) and collects threshed harvested crop, and **in that** the second auger conveyor (42) is an elevator for threshed harvested crop.

6. A combine harvester (10) according to any of claims 1 to 3, **characterized in that** the collecting device collects tailings and **in that** the second auger conveyor (42) is an elevator for tailings.

## Revendications

1. Moissonneuse-batteuse (10) avec un dispositif de collecte pour la récolte et un premier convoyeur à vis (46) disposé au plancher du dispositif de collecte, qui est conçu pour amener la récolte à un deuxième convoyeur à vis (42) qui s'étend au moins sur une partie de sa longueur en faisant un angle avec la direction longitudinale du premier convoyeur à vis (46), **caractérisée en ce que** le premier convoyeur à vis (46) et le deuxième convoyeur à vis (42) présentent une vis de transport (44) continue, flexible, qui s'étend tant sur la longueur du premier convoyeur à vis (46) sur le plancher du dispositif de collecte que sur la longueur du deuxième convoyeur à vis (42), et **en ce que** la vis de transport (44) est reliée à son extrémité à un mécanisme d'entraînement (45), qui est disposé sur une paroi latérale du dispositif de collecte.

2. Moissonneuse-batteuse suivant la revendication 1, **caractérisée en ce que** la vis de transport (44) est sans noyau.

3. Moissonneuse-batteuse suivant la revendication 1 ou 2, **caractérisée en ce que** le deuxième convoyeur à vis (42) s'étend au moins sur une partie de sa longueur en oblique ou verticalement vers le haut ou vers le bas.

4. Moissonneuse-batteuse (10) suivant l'une des revendications 1 à 3, **caractérisée en ce que** le dispositif de collecte est une trémie à grains (18) et **en ce que** le deuxième convoyeur à vis (42) est disposé dans un tuyau de vidange (20) de la trémie à grains.

5. Moissonneuse-batteuse (10) suivant l'une des revendications 1 à 3, **caractérisée en ce que** le dispositif de collecte est disposé en dessous d'un dispositif de tamisage (34) et collecte la récolte battue et **en ce que** le deuxième convoyeur à vis (42) est un élévateur pour la récolte battue.

6. Moissonneuse-batteuse (10) suivant l'une des revendications 1 à 3, **caractérisée en ce que** le dispositif de collecte recueille les barbes et l'enveloppe et le deuxième convoyeur à vis (42) est un élévateur pour les barbes et l'enveloppe.
